Europäisches Patentamt

European Patent Office

Office européen des brevets

(11) Publication number: **0 402 042**
**A1**

# EUROPEAN PATENT APPLICATION

(21) Application number: 90305929.3

(51) Int. Cl.⁵: **C08K 3/28, C08L 23/06**

(22) Date of filing: 31.05.90

(30) Priority: **07.06.89 US 362989**

(43) Date of publication of application:
**12.12.90 Bulletin 90/50**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Schwab, Frederick Charles**
**34 Spear Street**
**Metuchen, New Jersey 08840(US)**

(74) Representative: **Colmer, Stephen Gary et al**
**Patent Department c/o Mobil Services**
**Company Limited Mobil Court 3 Clements**
**Inn**
**London WC2A 2EB(GB)**

(54) Copper salts as ultraviolet stabilizers for light unstable pigments.

(57) A composition comprising (i) a linear polymer of ethylene; (ii) a photodegradable pigment; and (iii) a source of Cu as a stabilizer against degradation, by ultraviolet light, of the composition,

EP 0 402 042 A1

## COPPER SALTS AS ULTRAVIOLET STABILIZERS FOR LIGHT UNSTABLE PIGMENTS

THIS INVENTION relates to polyethylene compositions; more particularly, this invention relates to polyethylene compositions comprising copper salts as ultraviolet stabilizers for light unstable pigments.

Polyethylene is usually stablized against ultraviolet exposure and degradation, particularly when it is used in outdoor applications. Such degradation can be measured by change in elongation.

Linear polymers of ethylene such as high density polyethylene (HDPE) and linear low density polyethylene (LLDPE) exhibit degradation in the presence of ultraviolet unstable pigments. That type of degradation is described in Canadian Patent 1073581. In the Canadian patent experimentation is reported that reveals that the anatase form of titanium dioxide accelerates the degradation of polyethylene on exposure to ultraviolet light.

This invention seeks to reduce the degradation by ultraviolet light of compositions comprising polyethylene and a photodegradable pigment; for example, anatase.

According the present invention, there is provided a composition comprising

    i) a linear polymer of ethylene

    ii) a photodegradable pigment

    iii) a source of Cu as a stablizer against degradation, by ultravoilet light, of the composition.

Preferably photodegradable pigment ii) comprises anatase.

The linear polymer of ethylene may be a high density polyethylene or a linear low density polyethylene. Linear low density polyethylenes are copolymers of ethylene and a higher olefin and contain a sufficient amount of the higher olefin so that the copolymer has a density from 0.90 to 0.94, preferably from 0.91 to 0.93. The higher olefin is commonly 1-butene, 1-hexene, 4-methyl-1-pentene or 1-octene. Such materials are described in U.S Patent 4,076,698.

Accelerated degradation of linear polymers of ethylene containing anatase is reflected by the following Table in which LLDPE was compounded with anatase and exposed to ultraviolet light.

TABLE

| Exposure Time, Hours | 0 | 100 | 75 | 50 | 25 | 0 | % Rutile TiO$_2$ |
|---|---|---|---|---|---|---|---|
|  | 0 | 0 | 25 | 50 | 75 | 100 | % Anatase TiO$_2$ |
| 0 | 100* | 100 | 100 | 100 | 100 | 100 | |
| 50 | 89 | 100 | 94 | 83 | 81 | 90 | |
| 100 | 58 | 40 | 17 | 8 | 11 | 12 | |
| 150 | 48 | 12 | 6 | 4 | 4 | 6 | |
| 200 | 6 | 6 | 4 | 3 | 3 | 4 | |

\* %Original Elongation Retained

It was unexpectedly discovered that when such anatase- containing polyethylene compositions were compounded with effective sources of cupric ion retardation of the UV degradation of the anatase-containing polymers was achieved. In the experiments described below the polymer compositions contained three percent by weight anatase. The amount of anatase will depend on the purpose and function of the pigment in any particular composition typically from 0.1 to 30 wt% of the composition. Preferably the linear polymer of ethylene (i), the photogradable pigment (ii) and the source of Cu$^{+2}$ (iii) are in intimate admixture e.g by compounding or other blending.

Small amounts of the source of copper can by effective to retard the photodegradation of the anatase-containing polyethylenes. In experimental work described below, the amount of copper salts used ranged from 300 to 3000 ppm. Preferably, the copper salt comprises copper (II) . Soluble forms of the copper salt are preferred, including the nitrate and the chloride. The sale can be introduced into the composition in amy convenient manner, such as by direct addition or by introduction with a master batch containing an ethylene polymer and a high concentration of the copper salt.

The compositions can also contain conventional ingredients, such as fillers, antioxidants, stabilizers and the like.

The following Examples illustrate the invention. Parts and percentages are by weight.

## EXAMPLE

In accordance with the invention, small amounts of cupric nitrate [$Cu(NO_3)_2$], 300 and 3000ppm, were blended into LLDPE, along with three percent of the titanium dioxide pigment (anatase or rutile form). Molded plaques were exposed for 200 hours in a QUV Weather-O-Meter. The change in elongation was measured as a function of exposure time.

| Time, Hours. | 3% Rutile | | | 1.5% Rutile | | | 3% Anatase | | |
|---|---|---|---|---|---|---|---|---|---|
| | | | | | 1.5% Anatase | | | | |
| | 0 | 300 | 3000 | 0 | 300 | 3000 | 0 | 300 | 3000 |
| 0 | 804 | 817 | 804 | 836 | 727 | 611 | 820 | 921 | 942 |
| 50 | 810 | 883 | 883 | 760 | 873 | 920 | 697 | 895 | 908 |
| 100 | 809 | 880 | 792 | 693 | 815 | 853 | 223 | 893 | 927 |
| 150 | 728 | 885 | 859 | 257 | 667 | 687 | 63 | 601 | 695 |
| 200 | 716 | 800 | 835 | 37 | 828 | 901 | 18 | 853 | 963 |
| % Elongation | | | | | | | | | |

## Claims

1 A composition comprising:
   i) a linear polymer of ethylene;
   ii) a photodegradable pigment; and
   iii) a source of Cu as a stabilizer against degradation, by ultraviolet light, of the composition.

2 A composition according to claim 1 wherein ii) comprises anatase.

3 A composition according to claim 1 or 2 wherein i) comprises high density polyethylene or linear low density polyethylene.

4 A composition according to any proceeding claim wherein iii) is present in an amount of at least 300ppm. of copper (II) salt.

5 A composition according to any proceeding claim wherein iii) comprises copper (II) nitrate.

6 A composition according to any proceeding wherein i), ii) and iii) are in intimate admixture.

7 A method of reducing the degradation by ultraviolet light of a composition comprising polyethylene and a photodegradable pigment, which method comprises adding thereto a source of $Cu^{+2}$ as a stabilizer.

8 The use of $Cu^{+2}$ as a stablizer against degradation by ultraviolet light, of composition comprising polyethylene and a photodegradable pigment.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 82, no. 20, 19 May 1975 Columbus, Ohio, USA Belokoneva,G.I.; et al: "Effect of some fillers on the photo and thermal decomposition of polyethylene" page 26; column 2; ref. no. 125958T * abstract * | 1-8 | C08K3/28 C08L23/06 |
| A | CHEMICAL ABSTRACTS, vol. 81, no. 26, 23 December 1974 Columbus, Ohio, USA & JP-A-49062544 (UBE INDUSTRIES) 18/6/1974; page 57; column 1; ref. no. 170635A * abstract * | 1-8 | |
| A,D | CA-A-1073581 (CANADIAN TITANIUM PIGMENTS LTD.) *whole document* | 1-8 | |
| | | | **TECHNICAL FIELDS SEARCHED (Int. Cl.5)** |
| | | | C08K C08L |

The present search report has been drawn up for all claims

| Place of search | Date of completion of the search | Examiner |
|---|---|---|
| THE HAGUE | 22 AUGUST 1990 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document